# EUROPÄISCHE PATENTANMELDUNG

(11) **EP 0 568 058 A2**
(43) Veröffentlichungstag der Anmeldung: **03.11.1993**
(21) Anmeldenummer: 93106954.6
(22) Anmeldetag: 29.04.1993
(51) Int. Cl.: B23B 31/02, B23B 31/26

(54) **Vorrichtung zum Umrüsten einer Ständer-Bohrmaschine**

(30) Priorität: 30.04.1992 DE 4214298
(71) Anmelder: BAUGERÄTE-UNION GMBH & CO., MASCHINENHANDELS KG, D-91522 Ansbach (DE)
(72) Erfinder: Bauer, Manfred, W-8832 Weissenburg (DE)
(74) Vertreter: Sasse, Volker, Dipl.-Ing.

(57) **Zusammenfassung**

Bei einer Vorrichtung (V) zum Umrüsten einer Ständer-Bohrmaschine mit axial nicht durchbohrter Bohrspindel (S) zum Fräsen, bei der im freien Ende (1, 1') der Bohrspindel (S) eine Morsekegel-Werkzeugaufnahme (2) vorgesehen ist, die einen Querschlitz (3) der Bohrspindel (S) schneidet, ist ein in Richtung der Spindelachse in oder an der Bohrspindel (S) festlegbares Spannhilfsglied (H) vorgesehen, mit dem ein in die Werkzeugaufnahme (2) eingesetzter Fräser-Spanndorn (D) zusätzlich zur Morsekegel-Steckverbindung an der Bohrspindel (S) axial festspannbar ist.

## Beschreibung

Die Erfindung betrifft eine Vorrichtung der im Oberbegriff des Patentanspruchs 1 angegebenen Art.

Bei Bohr-Fräsmaschinen ist die Bohrspindel axial durchbohrt und mit einem Innengewinde versehen, so daß bei einer Umstellung vom Bohren zum Fräsen der Fräser-Spanndorn sich axial festspannen läßt. Die üblicherweise vorgesehene Morsekegel-Steckverbindung reicht für das Fräsen nicht aus, da beim Fräsen im wesentlichen nur seitliche Kräfte auftreten und ggf. nur geringe oder gar keine axial nach oben gerichteten Kräfte vorhanden sind.

Einfache bzw. normale Bohrmaschinen wie Ständer-Bohrmaschinen, gerade für Heimwerker und für einfachere Einsatzbedingungen, haben keine axial durchbohrte Bohrspindel.

Einen Fräser-Spanndorn nur in der Morsekegel-Steckverbindung zu halten, reicht beim Fräsen wegen der seitlich auftretenden Kräfte, die auch lockernde Schwingbewegungen hervorrufen, bzw. wegen der fehlenden axialen Kräfte nicht aus. Der Spanndorn würde sich lockern.

Der Erfindung liegt die Aufgabe zugrunde, eine einfache Vorrichtung zu schaffen, mit der eine Bohrmaschine mit axial nicht durchbohrter Bohrspindel sich problemlos zum Fräsen umrüsten läßt. Dabei sind die Konstruktion der Bohrmaschine und soweit möglich, auch die der Fräser-Spanndorne nicht zu ändern. D.h. an der Bohrmaschine selbst sollen keine Änderungen vorgenommen werden.

Die gestellte Aufgabe wird erfindungsgemäß mit den im kennzeichnenden Teil des Anspruches 1 enthaltenen Merkmalen gelöst.

Mit dem Spnnhilfsglied wird die Möglichkeit geschaffen, bei praktisch unverändertem Konzept der Bohrmaschine trotz der fehlenden axialen Durchbohrung der Bohrspindel den Fräser-Spanndorn zusätzlich zur Morsekegel-Steckverbindung in axialer Richtung so festzuspannen, daß das Fräsen mit herkömmlichen Fräswerkzeugen möglich ist. Es wird eine kostengünstige und einfach zu handhabende Erweiterung des Einsatzbereiches einer normalen Bohrmaschine erreicht. Speziell für den Heimwerker ist dies von Vorteil, weil er keine Änderungen an der Bohrmaschine vorzunehmen braucht. Die Morsekegel-Steckverbindung zentriert und überträgt die Arbeitsdrehmomente.

Besonders zweckmäßig ist die Ausführungsform gemäß Anspruch 2, weil Standard-Grunddorne in verschiedenen Größen handelsüblich und kostengünstig erhältlich sind und zum Fräsen in einer normalen Bohrmaschine nur unwesentlich modifiziert zu werden brauchen.

Eine besonders zweckmäßige und für eine Bohrmaschine mit einer vorstehenden Bohrspindel geeignete Ausführungsform geht aus Anspruch 3 hervor. Die Hülse wird Teil des Fräser-Spanndorns. Sie läßt sich mit ihrem Spannkragen am freien Ende der Bohrspindel so festlegen, daß die beim Fräsen auftretenden Querkräfte auch bei fehlenden Axialkräften den Fräser-Spanndorn nicht aus der Werkzeugaufnahme zu lösen vermögen. Der axial geschlitzte Spannkragen läßt sich leicht auf das freie Ende der Spindel aufschieben und dann in Umfangsrichtung um die Bohrspindel spannen. Es ist keine Veränderung an der Bohrmaschine erforderlich. Die Modifikation am Standard-Grunddorn ist einfach, da nur die Hülse am Fräser-Aufnahmekopf angebracht zu werden braucht.

Eine besonders haltbare Verbindung zwischen der Hülse und dem Spanndorn geht aus Anspruch 4 hervor. Die beim Fräsen auftretenden Kräfte werden problemlos von der Schrumpfverbindung aufgenommen.

Eine weitere, wichtige Ausführungsform geht aus Anspruch 5 hervor. Durch den Umfangsschlitz und den Axialschlitz läßt sich der Spannkragen sehr fest an der Bohrspindel verspannen. In axialer Richtung ist eine belastbare Verbindung zwischen dem Spannkragen und dem Spanndorn geschaffen.

Gemäß Anspruch 6 läßt sich der Fräser-Spanndorn mit festem Sitz an der Bohrspindel anbringen.

Eine weitere Ausführungsform, die für eine nicht vorstehende Bohrspindel zweckmäßig, aber auch für eine Bohrspindel mit vorstehendem freien Ende brauchbar ist, geht aus Anspruch 7 hervor. Bei dieser Ausführungsform wird der zum Lösen eines Bohrfutters mittels eines Keils vorgesehene Querschlitz der Bohrspindel als Widerlager für das Spannkreuz benutzt, an dem der Fräser-Spanndorn in axialer Richtung verankert wird. Durch die formschlüssige Kopplung kann sich der Fräser-Spanndorn beim Fräsen nicht selbsttätig aus der Morsekegel-Steckverbindung lösen, die ihn auf die Bohrspindelachse zentriert und das Drehmoment überträgt. Es ist keine Modifikation an der Bohrmaschine erforderlich. Die Modifikation des Spanndorns ist baulich einfach und kostengünstig durchzuführen, da im wesentlichen nur eine axiale Bohrung für die Spannschraube vorzusehen ist.

Eine stabile Kraftübertragung wird bei der Ausführungsform gemäß Anspruch 8 erreicht. Das Spannkreuz sitzt stabil im Querschlitz, ist leicht einzusetzen und ebenso leicht wieder zu entnehmen, wenn die Bohrmaschine wieder mit einem Bohrfutter ausgerüstet werden muß.

Eine weitere, zweckmäßige Ausführungsform geht aus Anspruch 9 hervor. Die Form des Spannkreuzes sorgt einerseits für eine stabile Abstützung. Das Ende des Morsekegel-Steckteils des Spanndorns kann in den Querschlitz greifen, damit der Spanndorn auf übliche Weise mit einem Keil gelöst werden kann, wenn das Spannkreuz nach Lösen der Spannschraube aus dem Querschlitz herausgenommen ist.

Bei der Ausführungsform gemäß Anspruch 10 wird das Spannkreuz sauber zentriert, sobald der Fräser-Spanndorn eingedrückt ist. Die Spannschraube findet leicht in die Gewindebohrung.

Bei der Ausführungsform gemäß Anspruch 11 ist sichergestellt, daß der Fräserschaft drehsicher und axial fest im Aufnahmekopf sitzt.

Schließlich hat es sich als sehr vorteilhaft gezeigt, wenn die Vorrichtung gemäß Anspruch 12 ausgebildet ist. Bei dieser Ausführungsform sind unterschiedlich starke Fräserschäfte durch Einsetzen der jeweils erforderlichen Reduzierhülse nutzbar.

Anhand der Zeichnung werden Ausführungsformen des Erfindungsgegenstandes erläutert.

Es zeigt:
- Figur 1: einen Längsschnitt durch eine zum Fräsen umgerüstete Bohrspindel einer Bohrmaschine und
- Figur 2: einen Längsschnitt einer zweiten Ausführungsform.

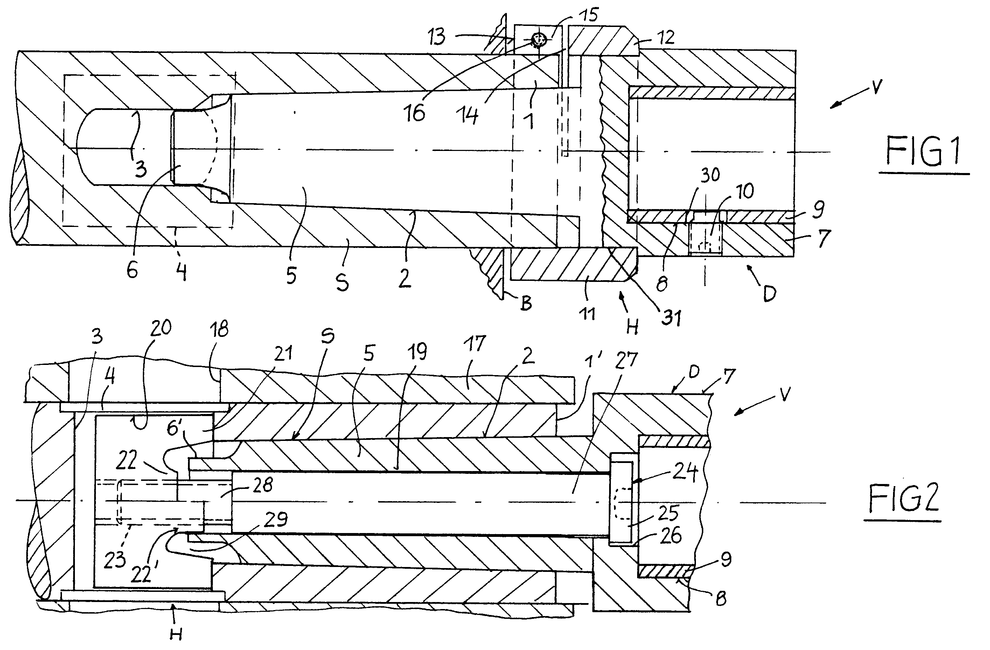

In Figur 1 ist eine Bohrspindel S einer Bohrmaschine B mit ihrem austrittsseitigen freien Ende 1 angedeutet. Die Bohrmaschine B ist beispielsweise eine Ständer-Bohrmaschine oder Waagerecht-Bohrmaschine, bei der die Bohrspindel S in ihrer Endstellung über das Gehäuse oder über eine nicht dargestellte Pinole vorsteht. Die Bohrspindel S ist axial nicht durchbohrt. Im Ende 1 ist eine Werkzeug-Aufnahme 2 (Morsekegel) eingeformt, die sich bis zu einem axial begrenzten Querschlitz 3 erstreckt. Der Querschlitz 3 kann an seinen Austrittsöffnungen von Abflachungen 4 eingefaßt sein. In die Aufnahme wird normalerweise ein Bohrfutter eingesteckt.

Um zum Fräsen an der Bohrspindel S ein nicht gezeigtes Fräswerkzeug festlegen zu können, ist ein Fräser-Spanndorn D mit seinem Morsekegel-Steckteil 5 in die Werkzeug-Aufnahme 2 eingesteckt, wobei ein Ende 6 in den Querschlitz 3 ragt, damit der Fräser-Spanndorn D mittels eines (nicht gezeigten) Keils ausgetrieben werden kann. Der Fräser-Spanndorn D weist einen Fräser-Aufnahmekopf 7 von im wesentlichen zylindrischer Gestalt mit einer Aufnahmebohrung 8 auf, in der beispielsweise eine Reduzierhülse 9 sitzt. Eine radiale Halteschraube 10, z.B. eine Madenschraube oder ein Gewindestift mit Innensechskant, dient zum Festlegen des Fräserschaftes.

Am Fräser-Spanndorn D ist auf einer rückwärtigen Durchmesserstufe 17 des Fräser-Aufnahmekopfes 7 eine Hülse 11 befestigt. Die Hülse 11 weist einen in Umfangsrichtung durchgehenden Endabschnitt 12 und einen davon durch einen über einen Teil des Umfangs verlaufenden Schlitz 14 getrennten Spannkragen 13 auf. Der Spannkragen 13 ist an einer Umfangsstelle von einem durchgehenden Axialschlitz 15 unterbrochen, der den Schlitz 14 schneidet. Die Hülse 11 ist zweckmäßigerweise auf die Durchmesserstufe 17 aufgeschrumpft. Es wäre aber auch denkbar, die Hülse 11 festzuschrauben, festzulöten oder auf andere Weise formschlüssig mit dem Fräser-Spanndorn D zu verbinden. Der Axialschlitz 15 wird von wenigstens einer, in etwa tangential liegenden Spannschraube 16 überbrückt.

Im montierten Zustand wird das austrittsseitige Ende 1 der Bohrspindel S vom Spannkragen 13 umfaßt, der mittels der Spannschraube 16 festgespannt ist und eine axiale Kopplung zwischen der Bohrspindel S und dem Spanndorn D herstellt. Auf diese Weise wird eine Vorrichtung V zum Umrüsten einer Bohrmaschine B zum Fräsen geschaffen, die ein Hilfsspannglied H, nämlich die Hülse 11 aufweist.

Bei der Ausführungsform gemäß Figur 2 sind übereinstimmende, konstruktive Details mit denselben Bezugszeichen versehen. Die Vorrichtung V zum Umrüsten einer Bohrmaschine zum Fräsen weist als Hilfsspannglied H ein Spannkreuz 20 mit im wesentlichen W-förmiger Gestalt auf, das in den Querschlitz 3 der Bohrspindel S eingesetzt ist. Das freie Ende der Bohrspindel S ragt bei dieser Bohrmaschine B nicht aus der Bohrmaschine heraus bzw. nicht über das Ende einer Pinole 17 vor. Die Pinole 17 ist mit einem auf den Querschlitz 3 ausrichtbaren Querschlitz 18 versehen. Das Morsekegel-Steckteil 5 des Fräser-Spanndorns D ist mit einer axialen Bohrung 19 versehen, die vom Grund der Bohrung 8 im Fräser-Aufnahmekopf 7 bis durch das Endteil 6' des Steckteils 5 verläuft.

Das Spannkreuz 20 weist zwei seitliche Stützschenkel 21 auf, die sich im Querschlitz 3 abstützen, sowie einen dazwischen liegenden Einschraubteil 22 bzw. 22', in dem eine Gewindebohrung 23 vorgesehen ist. In der unteren Hälfte von Figur 2 ist der Einschraubteil 22' als Zentrierteil ausgebildet, der in das Ende 6' des Morsekegel-Steckteils 5 hineinragt, wenn dieser bis in den Querschlitz 3 eingesteckt ist. Zwischen den Stützschenkeln 21 ist eine zurückgesetzte Ausnehmung 29 vorgesehen.

Den Fräser-Spanndorn durchsetzt axial eine Spannschraube 24, die sich mit ihrem Kopf 25 am Grund einer Vertiefung 26 in der Bohrung 8 abstützt und mit einem Paßschaft 27 in der Bohrung 19 geführt ist. Ein Gewindeabschnitt 28 der Spannschraube 24 ist in die Gewindebohrung 23 eingeschraubt, so daß der Fräser-Spanndorn D

## Patentansprüche

1. Vorrichtung zum Umrüsten einer Ständer-Bohrmaschine mit axial nicht durchbohrter Bohrspindel zum Fräsen, wobei im freien Ende der Bohrspindel eine
Morsekegel-Werkzeugaufnahme vorgesehen ist, die von einem Querschlitz in der Bohrspindel durchsetzt ist, dadurch gekennzeichnet, daß ein in oder an der Bohrspindel (S) festlegbares Spannhilfsglied (H) vorgesehen ist, mit dem ein in die Werkzeugaufnahme (2) eingesetzter Fräser-Spanndorn (D) zusätzlich zur Morsekegel-Steckverbindung an der Bohrspindel (S) axial festspannbar ist.

2. Vorrichtung nach Anspruch 1, dadurch gekennzeichnet, daß der Fräser-Spanndorn (D) ein modifizierter Standard-Grunddorn, z.B. mit der Spezifikation 55 x 155 für MK2 bis MK4 aus St 60 ist.

3. Vorrichtung nach den Ansprüchen 1 und 2, dadurch gekennzeichnet, daß das Spannhilfsglied (H), vorzugsweise für eine Bohrspindel (S) mit vorstehendem, freien Ende, eine auf dem Fräser-Aufnahmekopf (7) des Fräser-Spanndorns (D) festgelegte Hülse (11) mit einem axial durchgehend geschlitzten und in Umfangsrichtung um das freie Ende (1) der Bohrspindel (S) spannbaren Spannkragen (13) ist.

4. Vorrichtung nach Anspruch 3, dadurch gekennzeichnet, daß die Hülse (11) mit einem Endabschnitt (12) auf eine hintere Durchmesserstufe (31) des Fräser-Aufnahmekopfes (7) aufgeschrumpft ist.

5. Vorrichtung nach den Ansprüchen 3 und 4, dadurch gekennzeichnet, daß die Hülse (11) zwischen dem Endabschnitt (12) und dem Spannkragen (13) einen in Umfangsrichtung verlaufenden, mit dem Axialschlitz (15) des Spannkragens (13) schneidenden, durchgehenden Schlitz (14) aufweist, der sich über maximal 180° des Umfangs erstreckt.

6. Vorrichtung nach den Ansprüchen 3 bis 5, dadurch gekennzeichnet, daß im Spannkragen (13) wenigstens eine, den Axialschlitz (15) überbrückende, in etwa tangential liegende Spannschraube (16) angeordnet ist.

7. Vorrichtung nach den Ansprüchen 1 und 2, dadurch gekennzeichnet, daß das Spannhilfsglied (H), vorzugsweise für eine Bohrspindel (S), mit nicht vorstehendem Ende (1') ein in den Querschlitz (3) der Bohrspindel (S) herausnehmbar eingesetztes, sich im Querschnitt (3) axial abstützendes Spannkreuz (20) ist, daß der Morsekegel-Steckteil (5) des Fräser-Spanndorns (D) vom Fräser-Aufnahmekopf (7) her axial durchbohrt ist, und daß vom Fräser-Aufnahmekopf (7) aus eine Spannschraube (24) in das Spannkreuz (20) eingeschraubt ist, die den Fräser-Spanndorn (D) in axialer Richtung in die Bohrspindel (S) spannt.

8. Vorrichtung nach Anspruch 7, dadurch gekennzeichnet, daß die axiale Höhe des Spannkreuzes (20) erheblich kleiner als die lichte axiale Weite des Querschlitzes (3) der Bohrspindel (S) ist.

9. Vorrichtung nach Anspruch 7, dadurch gekennzeichnet, daß das Spannkreuz (20) annähernd W-förmig ist und zwei äußere, zum freien Ende (1') der Bohrspindel (S) weisende Stützschenkel (21), einen mittleren Einschraubteil (22, 22') mit einer Gewindebohrung (23) und zwischen den Stützschenkeln (21) eine Ausnehmung (29) für das in den Querschlitz (3) eintretende Ende (6') des Morsekegel-Steckteils (5) des Fräser-Spanndorns (D) aufweist.

10. Vorrichtung nach Anspruch 9, dadurch gekennzeichnet, daß das Einschraubteil (22') des Spannkreuzes (20) ein in das Ende (6') des Steckteils (5) eingreifendes Zentrierteil ist.

11. Vorrichtung nach den Ansprüchen 1 bis 10, dadurch gekennzeichnet, daß im Fräser-Aufnahmekopf (7) wenigstens eine radiale Halteschraube (10), (vorzugsweise eine Madenschraube oder ein Gewindestift) für einen Fräserschaft vorgesehen ist.

12. Vorrichtung nach wenigstens einem der Ansprüche 1 bis 11, dadurch gekennzeichnet, daß in den Fräser-Aufnahmekopf (7) eine Reduzierhülse (9) eingesetzt ist, die eine Durchgangsöffnung (30) für die Halteschraube (10) aufweist.
